# EUROPÄISCHE PATENTSCHRIFT

(11) **EP 0 717 225 B1**
(45) Veröffentlichungstag und Bekanntmachung des Hinweises auf die Patenterteilung: **26.08.1998**
(21) Anmeldenummer: 95118931.5
(22) Anmeldetag: 01.12.1995
(51) Int. Cl.: F16L 27/04, F16L 37/52, F01N 7/18

(54) **Vorrichtung zur Verbindung von zwei rohrförmigen Leitungsteilen**
Coupling device for two tubular elements
Dispositif de raccordement de deux éléments tubulaires

(30) Priorität: 14.12.1994 DE 4444550
(43) Veröffentlichungstag der Anmeldung: 19.06.1996
(73) Patentinhaber: DAIMLER-BENZ AKTIENGESELLSCHAFT, 70567 Stuttgart (DE); K.A.T. Entwicklungsgesellschaft für Abgasreinigung und Thermographie mbH, 71522 Backnang (DE); Christian Bauer GmbH & Co., 73642 Welzheim (DE)
(72) Erfinder: Abthoff, Jörg, Dr.-Ing., D-73655 Plüderhausen (DE); Fadini, Rolf, D-71397 Leutenbach (DE); Kästner, August, Dr.Ing., D-88682 Salem (DE); Ebinger, Günther, D-71522 Backnang (DE); König, Günter, D-73572 Heuchlingen (DE); Gersmann, Karl-Heinz, D-73527 Täserrot (DE)
(74) Vertreter: Dahmen, Toni, Dipl.-Ing.

(56) Entgegenhaltungen:
- EP-A- 0 084 589
- EP-A- 0 226 573
- FR-A- 1 006 009
- GB-A- 603 933

## Beschreibung

Die Erfindung bezieht sich auf eine gelenkige Rohrverbindung von zwei Leitungsteilen eines Kraftfahrzeuges gemäß dem Oberbegriff des Patentanspruchs 1.

Aus der DE 1 973 737 U ist bereits eine Vorrichtung der gattungsgemäßen Art zur gelenkigen Verbindung von zwei rohrförmigen Leitungsteilen, insbesondere von Abgasrohren für ein Abgasleitungssystem einer Brennkraftmaschine, bekannt. Die Leitungsteile sind über sphärische Anschlußstücke miteinander verbunden, wobei an beiden Anschlußstücken ein flanschförmiges Verbindungsstück anschlagbar ist, das über Schraubenfedern mit dem anderen Anschlußstück federnd verbunden ist. Die Anschlußstücke werden über das Federmittel mit einer Vorspannkraft zusammengehalten.

Zum allgemeinen technischen Hintergrund wird noch auf die Druckschriften DE-OS 28 10 584, DE-PS 914 334, US 37 27 951 und FR 23 60 028 verwiesen.

Der Erfindung liegt die Aufgabe zugrunde, eine gelenkige Rohrverbindung zur Verbindung von zwei Leitungsteilen so auszubilden, daß bei gleichbleibender Zuverlässigkeit der Rohrverbindung gegenüber dem gattungsgemäßen Stand der Technik eine wesentlich verbesserte Montierbarkeit und gleichzeitig eine erhebliche Reduzierung der Fertigungskosten erreichbar ist.

Die Aufgabe wird erfindungsgemäß durch die im Kennzeichen des Patentanspruchs 1 gegebenen Merkmale gelöst.

Ein Vorteil der erfindungsgemäßen Rohrverbindung liegt darin, daß diese mittels der Scheibenfedern und der Klammern sehr einfach und schnell zusammenfügbar ist und gleichzeitig eine zuverlässige Verbindung der beiden rohrförmigen Leitungsteile erreichbar ist. Die schnelle Montage führt beim Zusammenbau von Abgasanlagen, besonders in Serienstückzahlen, zu einer erheblichen Reduzierung der Fertigungskosten. Zudem sind die Materialkosten der erfindungsgemäßen Rohrverbindung wesentlich geringer als beim gattungsgemäßen Stand der Technik.

Bei Wartung und Reparatur von Abgasanlagen mit der erfindungsgemäßen Rohrverbindung ist von Vorteil, daß diese auch erheblich schneller demontierbar ist, als die Schraubverbindung gemäß dem Stand der Technik.

Ein weiterer wesentlicher Vorteil der erfindungsgemäßen Rohrverbindung liegt darin, daß auf einfache Weise eine akustische Entkopplung von den über die Aufhängung der Abgasanlage in die Karosserie eingeleiteten Motorschwingungen erreichbar ist. Dies führt u.a. zu einer Verminderung der Fahrzeuggeräusche.

Ein weiterer Vorteil der erfindungsgemäßen Rohrverbindung liegt in der Gewichtsersparnis gegenüber gattungsgemäßen Rohrverbindungen.

Die erfindungsgemäße Ausgestaltung nach Anspruch 2 stellt eine mögliche Ausführungsform der Erfindung dar, bei der besonders die Einfachheit der Einzelbauteile der Rohrverbindung von Vorteil ist, da sowohl für die mindestens zwei Klammern als auch für die beiden Scheibenfedern sehr einfach ausgebildete Gleichteile verwendbar sind.

Durch die Ausgestaltung der Erfindung nach Anspruch 3 ist auf einfache Weise eine gelenkige Rohrverbindung darstellbar, wie sie beispielsweise bei Abgasanlagen von Kraftfahrzeugen benötigt wird.

Durch die Ausgestaltung der Erfindung nach Anspruch 5 ist die Federcharakteristik der Rohrverbindung einstellbar.

Durch die erfindungsgemäße Ausgestaltung nach Anspruch 6 werden zum einen die Platzverhältnisse im Unterbodenbereich des Kraftfahrzeuges optimal genutzt und zum anderen ein sicherer Halt der Klammern an den Scheibenfedern erreicht.

Eine weitere vorteilhafte bauliche Ausgestaltung der Erfindung wird durch den Einsatz eines Ringkörpers gemäß Anspruch 7 erreicht. Der Ringkörper (z.B. aus Graphit) dient als Verschleiß- und Dichtfläche des Gelenks sowie als Entkopplungselement und kann erforderlichenfalls leicht ausgetauscht werden. Im Betrieb der Brennkraftmaschine sorgt der an den Flansch angepaßte Ringkörper für die Leichtgängigkeit der Winkelbewegung.

Weitere Ausgestaltungen und Vorteile der Erfindung gehen aus den übrigen Unteransprüchen und der Beschreibung hervor.

In der Zeichnung ist die Erfindung anhand dreier Ausführungsbeispiele näher erläutert. Es zeigen:

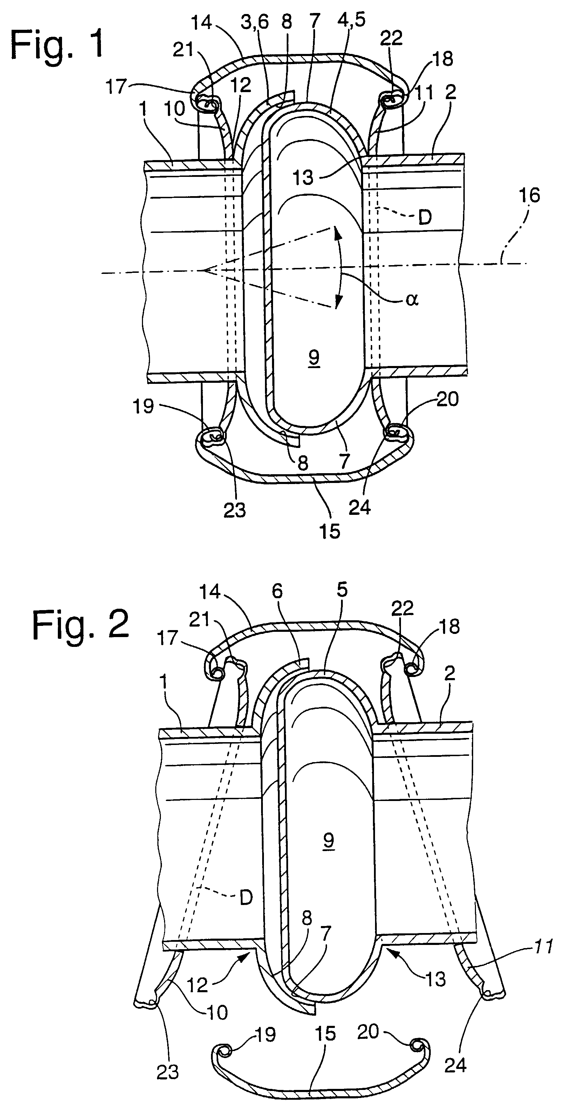

- Fig. 1: in einem ersten Ausführungsbeispiel eine erfindungsgemäße gelenkige Rohrverbindung für zwei Leitungsteile in zusammengebautem Zustand, wobei an den jeweiligen Endabschnitten der Leitungsteile sphärische Anschlußstücke ausgebildet sind, die ein Kugelgelenk bilden und wobei an jedem der beiden Anschlußstücke ein diesem zugeordnetes und als Scheibenfeder ausgebildetes flanschförmiges Verbindungsstück angeordnet und an dem jeweiligen Anschlußstück derart abstützbar ist, daß die beiden Anschlußstücke durch zwei an den Scheibenfedern angreifende Klammern mit einer Vorspannung zusammengehalten sind,
- Fig. 2: eine Darstellung der teilweise zusammengebauten Vorrichtung analog Fig. 2,

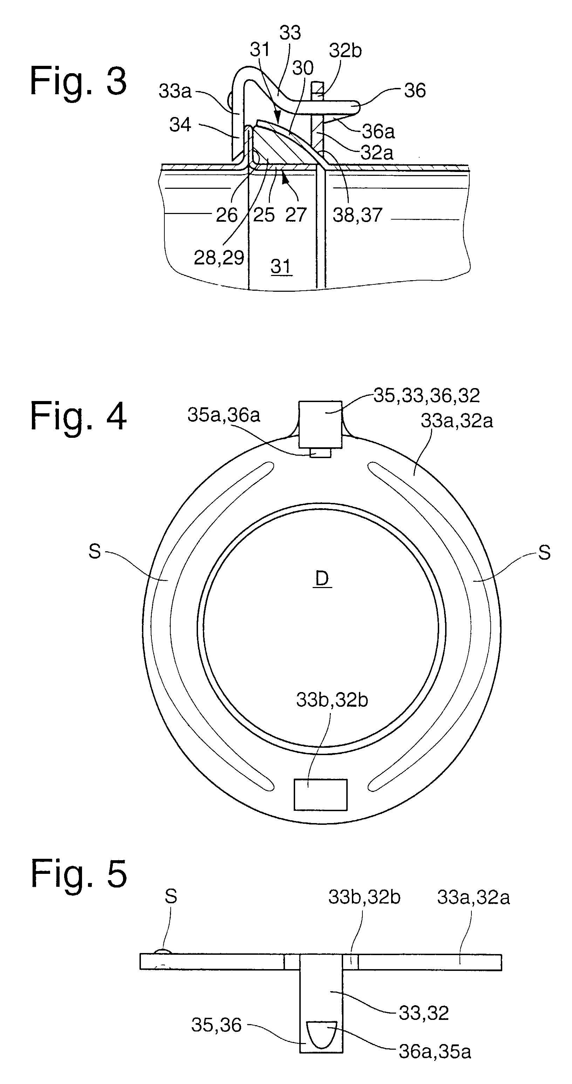

- Fig. 3: in einem zweiten Ausführungsbeispiel einen an dem einen Anschlußstück angeordneten Anschlag, der zusammen mit einem Abschnitt des Anschlußstücks eine Aufnahme für einen Ringkörper bildet, der an das andere Anschlußstück angepaßt ist und mit diesem ein Gelenk bildet, wobei an jedem der beiden Anschlußstücke eine als flanschförmiges Verbindungsstück ausgebildete Scheibenfeder anschlagbar ist und wobei mit jeder Scheibenfeder eine Klammer fest verbunden ist sowie gegenüber der Klammer eine Klammeraufnahme in der Scheibenfeder angeordnet ist, wobei die Verbindung der beiden Anschlußstücke über die Klammern derart erfolgt, daß jede Klammer in der Klammeraufnahme der jeweils gegenüberliegenden Scheibenfeder eingreifbar ist,
- Fig. 4: eine erste Ansicht der Klammer von Fig. 3,
- Fig. 5: eine zweite Ansicht der Klammer von Fig. 3 und 4
- Fig. 6: in einem dritten Ausführungsbeispiel die erfindungsgemäße Vorrichtung mit nur einem als Scheibenfeder ausgebildeten flanschförmigen Verbindungsstück an dem einen Anschlußstück und zwei mit dem anderen Anschlußstück befestigten Klammern,
- Fig. 7: eine erste Ansicht der Scheibenfeder aus Fig. 6 und
- Fig. 8: eine zweite Ansicht der Scheibenfeder aus den Fig. 6 und 7.

Die Fig. 1 und 2 zeigen in einem ersten Ausführungsbeispiel eine Vorrichtung zur gelenkigen Verbindung von zwei rohrförmigen Leitungsteilen 1 und 2 mit Endabschnitten 3 und 4, an denen je ein sphärisches Anschlußstück 5 und 6 ausgebildet ist. Die beiden Anschlußstücke 5 und 6 sind so ausgebildet, daß eine sphärische Außenkontur 7 des Anschlußstückes 5 mit einer sphärischen Innenkontur 8 des Anschlußstücks 6 in einer Gleitpaarung zu einem Kugelgelenk 9 verbunden sind. In Fig. 1 ist die montierte Vorrichtung gezeigt. Fig. 2 zeigt eine Darstellung der Vorrichtung in teilweise zusammengebautem Zustand.

An der Außenwand jeder der beiden Endabschnitte 3 und 4 ist an deren Übergang zu den sphärischen Anschlußstücken 5 und 6 jeweils ein diesen zugeordnetes flanschförmiges Verbindungsstück angeordnet, das als Scheibenfeder 10 bzw. 11 ausgebildet ist. Die Scheibenfedern 10 bzw. 11 stützen sich an dem jeweiligen Übergang zwischen Leitungsteil 1 bzw. 2 und Anschlußstück 5 bzw. 6 in Lagern 12, 13 ab.

Die beiden Endabschnitte 3, 4 werden durch Spannmittel, die im gezeigten Beispiel aus zwei elastische Klammern 14 und 15 bestehen, zusammengehalten. Die beiden Scheibenfedern 10 bzw. 11 werden von den Klammern 14 und 15 von außen umgriffen. Jede der Klammern 14, 15 greift mit ihren Enden 17, 18 bzw. 19, 20 in im radial äußeren Bereich einer Stirnseite der Scheibenfedern 10, 11 angeordneten Ausnehmungen 21, 22 bzw. 23, 24 ein, die zur Aufnahme der Enden 17, 18 bzw. 19, 20 der Klammern 14, 15 dienen. Die Klammern 14, 15 sowie die Scheibenfedern 10, 11 bilden Federmittel, die die Endabschnitte 3, 4 mit einer Vorspannung zusammenhalten. Das Anschlußstück 5 steht somit über die flanschförmigen Verbindungsstücke (Scheibenfedern 10, 11) und die an diesen angreifenden Klammern 14, 15 in Wirkverbindung mit dem Anschlußstück 6.

Die Klammern 14 und 15 bestehen vorzugsweise aus federelastischem Werkstoff, können aber auch starr ausgebildet sein. Es können auch, anstelle von Klammern, Schrauben oder andere geeignete Spannmittel verwendet werden. Hinsichtlich der Montierbarkeit sind jedoch Klammern für die beschriebene Rohrverbindung besonders vorteilhaft.

Die Klammern 14, 15 weisen einen in Richtung einer Längsachse 16 gewölbten Klammerabschnitt auf, wobei die beiden Enden 17, 18 bzw. 19, 20 der Klammern 14 bzw. 15 in Richtung der Ausnehmungen 21, 22 bzw. 23, 24 gebogene Umbördelungen aufweisen, die in die Ausnehmungen 21, 22 bzw. 23, 24 der Scheibenfedern 10 bzw. 11 eingreifen.

Mit dem durch die sphärischen Anschlußstücke 5, 6 gebildeten Kugelgelenk 9 ist eine Winkelbewegung der beiden Leitungsteile 1, 2 relativ zueinander um die Längsachse 16 sowie um eine Hoch- und Querachse ermöglicht, wobei ein möglicher Schwenkwinkel α bei der Winkelbewegung der beiden Leitungsteile 1, 2 im Bereich von 0 bis 40 Grad liegt.

Aus Bauraumgründen sind die Scheibenfedern 10 bzw. 11 bevorzugt oval ausgebildet.

Zur Erzeugung einer vorbestimmten, auf das Kugelgelenk 9 einwirkenden Anpreßkraft der Scheibenfeder 10, 11 sind die Klammern 14, 15 über den Umfang der Scheibenfedern 10, 11 verteilt angeordnet.

Die Scheibenfedern 10, 11 besitzen eine zentrale Durchbrechung D zur Durchführung der rohrförmigen Leitungsteile 1 bzw. 2.

In einer alternativen Ausführungsform der Erfindung (ähnlich zu Fig. 3) kann die Klammer 15 mit der Scheibenfeder 10 und die Klammer 14 mit der Scheibenfeder 11 fest verbunden sein. Die federelastischen Klammern 14, 15 besitzen dann jeweils ein freies Klammerende, mit dem die Klammer 14, 15 an der jeweils gegenüberliegenden Scheibenfeder 11 bzw. 10 einklipsbar ist.

Die Montage der Vorrichtung ist ein Fig. 2 angedeutet. Zunächst werden die Leitungsteile 1, 2 zusammengesteckt. Anschließend werden die beiden Scheibenfedern 10, 11 an der der Klammer 14 zugeordneten Seite zusammengedrückt und die erste Klammer 14 eingehängt. Sodann werden die Scheibenfedern 10, 11 an der gegenüberliegenden Seite mit Hilfe einer Spannvorrichtung zusammengedrückt und die Klammer 15 eingehängt. Nach dem Einhängen der Klammer 15 wird die Spannvorrichtung entlastet und die beiden Leitungsteile 1, 2 sind nun gelenkig miteinander verbunden.

In den Fig. 3 bis 5 ist ein zweites Ausführungsbeispiel der Erfindung dargestellt. Ein erstes Anschlußstück 25 mit Anschlag 26 bildet zusammen mit einem Abschnitt 27 des Anschlußstücks 25 eine Aufnahme 28 für einen Ringkörper 29, dessen Außenkontur an die Innenkontur eines zweiten Anschlußstückes 30 angepaßt ist und mit diesem ein Gelenk 31 bildet. Der Ringkörper 29 besteht vorzugsweise aus Graphit, kann aber auch aus einem anderen geeigneten Dichtwerkstoff mit guten Verschleißeigenschaften hergestellt sein.

An dem ersten Anschlußstück 25 ist ein erstes flanschförmiges Verbindungsstück, das als Scheibenfeder 33a mit einem Ende 34 ausgebildet ist, anschlagbar, wobei mit der Scheibenfeder 33a eine Klammer 33 fest verbunden ist und wobei sich auf der der Klammer 33 gegenüberliegenden Seite eine Klammeraufnahme 33b (siehe Fig. 4) in der Scheibenfeder 33a befindet.

An dem zweiten Anschlußstück 30 ist ein zweites flanschförmiges Verbindungsstück anschlagbar, das als eine der Scheibenfeder 33a baugleiche Scheibenfeder 32a nebst einer mit dieser fest verbundenen Klammer 32 (siehe Fig. 4) ausgebildet ist. Die Scheibenfeder 32a ist an einer Kontur 38 des Anschlußstückes 30 anschlagbar.

In Fig. 4 sind die Bezugszeichen für beide Scheibenfedern 32a und 33a nebst den mit diesen fest verbundenen Bauteilen eingezeichnet.

An den Enden 35 bzw. 36 der Klammern 32 bzw. 33 sind Nasen 35a bzw. 36a angeordnet, die in die Klammeraufnahmen (Nasenaufnahmen) 33b bzw. 32b einklipsbar sind. Bei der Verbindung der beiden Anschlußstücke 25 und 30 sind also die Scheibenfedern 32a und 33a um 180° versetzt zueinander, damit beim Gegeneinanderdrücken der beiden Scheibenfedern 33a und 32a die Nase 35a der Klammer 32 in die Nasenaufnahme 33b der Scheibenfeder 33a und die Nase 36a der Klammer 33 in die Nasenaufnahme 32b der Scheibenfeder 32a einklipsen kann.

Die Spannmittel sind hier durch die mit der Scheibenfeder 32a einteilig ausgeführte Klammer 32 und die mit der Scheibenfeder 33a einteilig ausgeführte Klammer 33 gebildet.

Zum Schutz der Oberfläche des Anschlußstückes 30 besitzt die Scheibenfeder 32a eine Anfasung 37, die der sphärischen Kontur 38 des zweiten Anschlußstückes 30 im Bereich der Auflagefläche der Scheibenfeder 32a angepaßt ist.

Im Ausführungsbeispiel sind lediglich zwei Klipsverbindungen beschrieben. Selbstverständlich können auch, mittels mehrerer am Umfang verteilter, mit der Scheibenfeder fest verbundener Klammern, mehrere Klipsverbindungen vorgesehen sein.

In einer weiteren Ausführungsform der Erfindung ist es auch möglich, daß an dem zweiten Anschlußstück 30 anstelle der Scheibenfeder 32a eine starre Andrückscheibe anschlagbar ist und die Verbindung der beiden Anschlußstücke 25, 30 nur über die Klammer 33 erfolgt, die mit der Scheibenfeder 33a fest verbunden ist, wobei die Scheibenfeder 33a an dem ersten Anschlußstück 25 abstützbar und die Klammer 33 mittels der Nase 36a in eine Nasenaufnahme der Andrückscheibe einklipsbar ist. An der Scheibenfeder 32a können wiederum mehrere Klammern 33 mit Nasen 36a angeordnet sein, die in korrespondierende Nasenaufnahmen der Andrückscheibe einklipsbar sind.

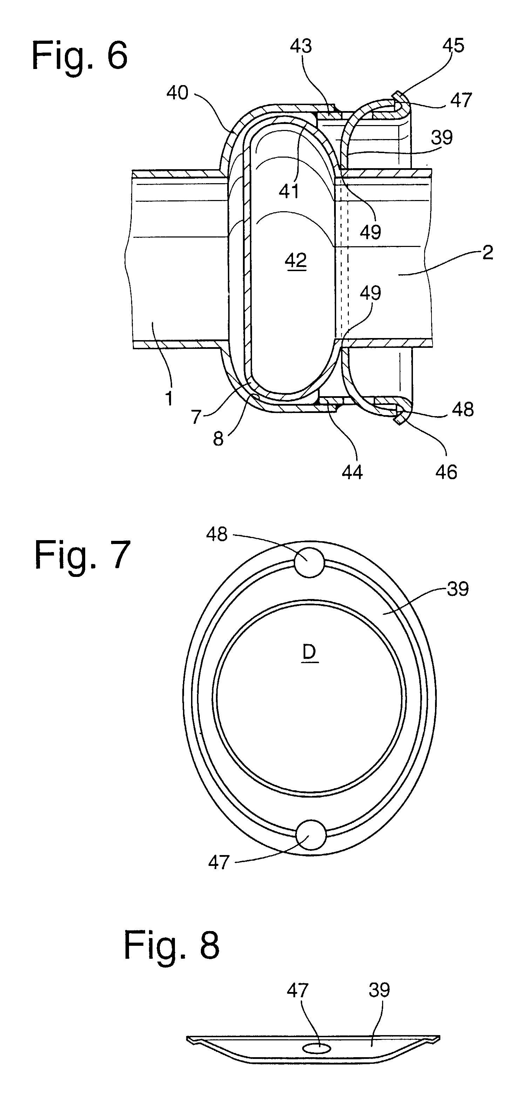

In Fig. 6 ist in einem dritten Ausführungsbeispiel die erfindungsgemäße Vorrichtung mit nur einer Scheibenfeder 39 dargestellt, wobei diese gleichzeitig das flanschförmige Verbindungsstück bildet.

Zwei Anschlußstücke 40 und 41 bilden ein Kugelgelenk 42 analog zu dem bereits oben (Kugelgelenk 9) beschriebenen. Mit dem Anschlußstück 40 sind zwei federelastische bzw. starre Klammern 43 und 44 fest verbunden, die mit Klammerhaken 45 und 46 in Aufnahmen 47, 48 in der Scheibenfeder 39 eingreifen, die gleichzeitig das flanschförmiges Verbindungsstück bildet. Die Scheibenfeder 39 ist dem Anschlußstück 41 zugeordnet und stützt sich in dessen Lager 49 gegen die Klammern 43 und 44 nebst Scheibenfeder 39 ab. Die Spannmittel der Scheibenfeder 39 sind in diesem Ausführungsbeispiel also die Klammern 43 und 44.

Die Fig. 7 und 8 zeigen zwei Ansichten der Scheibenfeder 39 mit den Aufnahmen 47, 48 für die Klammerhaken 45, 46 aus Fig. 6.

Die Erfindung ist nicht auf die gezeigten Ausführungsbeispiele beschränkt. Sie ist besonders auch für starr verbundene Rohre einsetzbar (bei denen also kein oder kein nennenswerter Schwenkwinkel α zwischen den beiden Leitungsteilen möglich ist).

Die Federcharakteristik der erfindungsgemäßen Rohrverbindung ist neben der Dicke der Scheibenfeder beispielsweise mittels einer Federserienschaltung einstellbar. Zu letzterer sind an einem Anschlußstück oder an beiden Anschlußstücken mehrere in Serie nebeneinander stehend angeordnete Scheibenfedern zusammengefaßt, wobei die jeweils außen liegende Scheibenfeder von der Klammer umfaßt und so die Rohrverbindung zusammengespannt wird.

Die Erfindung umfaßt hinsichtlich der zu verbindenden Rohre beliebige Rohrquerschnitte (z.B. kreisrunder, ovaler oder vielekkiger Rohrquerschnitt), beliebige Rohrdurchmesser (z.B. von 0,1 -7000 mm) und Rohrwerkstoffe (z.B. Metall, Kunststoff, Hartgummi). Selbstverständlich kann bei den zu verbindenden Leitungsteilen ein Leitungsteil auch als Stutzen, der direkt an einer Einlaß-oder Auslaßseite der Brennkraftmaschine angeformt ist, ausgebildet sein.

Ferner können die zu verbindenden Leitungsteile auch in einem Winkel zueinander stehen, sodaß sich die Längsachsen der beiden Leitungsteile schneiden.

Desweiteren können die Spannfedern mit Sicken S (siehe Fig. 4) zur Verstärkung der Klammern versehen sein und/oder eine innenliegende Kronenform aufweisen. Insbesondere sind weitere Ausführungsformen mit integrierten Klammern möglich und zwar sowohl bei Ausführungsformen mit einer als auch mit zwei oder mehreren Scheibenfedern. Natürlich können anstelle der Klammern, wie oben bereits erwähnt, auch Schrauben oder ähnliche Spannmittel verwendet werden, falls dies zweckmäßig erscheint.

## Patentansprüche

1. Gelenkige Rohrverbindung für zwei Leitungsteile eines Kraftfahrzeuges, die sphärische Anschlußstücke zur Verbindung der beiden Leitungsteile umfassen und mindestens an einem Anschlußstück ein axial an diesem anschlagbares flanschförmiges Verbindungsstück aufweist, das über Federmittel mit dem anderen Anschlußstück federnd verbunden ist, wobei die Anschlußstücke über das Federmittel mit einer Vorspannkraft zusammengehalten sind, **dadurch gekennzeichnet,**
daß das Federmittel eine Scheibenfeder (10,11,32a,33a,39) umfaßt, durch die gleichzeitig das Verbindungsstück gebildet ist, und das Federmittel ferner mindestens eine mit dem jeweils anderen Anschlußstück (5,6,25,30,40,41) in Wirkverbindung stehende und an der Scheibenfeder (10,11,32a,33a,39) angreifende oder mit dieser fest verbundene Klammer (14,15,32,33,43,44) aufweist.

2. Rohrverbindung nach Anspruch 1,
**dadurch gekennzeichnet,**
daß an jedem der zwei Anschlußstücke (5,6) eine diesem zugeordnete Scheibenfeder (10,11) angeordnet und in einem Lager (12,13) des zugehörigen Anschlußstücke (5,6) abstützbar ist, wobei die beiden Scheibenfedern (10,11) durch mindestens zwei Klammern (14,15) derart gegeneinander vorspannbar sind, daß die Rohrverbindung zusammenhalten wird.

3. Rohrverbindung nach Anspruch 1,
**dadurch gekennzeichnet,**
daß die beiden Anschlußstücke (5,6) ein Kugelgelenk (9) bilden, das eine Winkelbewegung der beiden Leitungsteile (1,2) relativ zueinander um die Längsachse (16), die Hoch- und die Querachse ermöglicht, wobei der mögliche Schwenkwinkel bei der Winkelbewegung der beiden Leitungsteile (1,2) relativ zueinander im Bereich von 0 bis 40 Grad liegt.

4. Rohrverbindung nach Anspruch 3,
**dadurch gekennzeichnet,**
daß zur Erzeugung einer vorbestimmten, auf das Kugelgelenk (9,42) einwirkenden Federanpreßkraft über den Umfang der Scheibenfedern (10,11,32a,33a,39) verteilte Klammern (14,15,32,33,43,44) angeordnet sind.

5. Rohrverbindung nach Anspruch 1,
**dadurch gekennzeichnet,**
daß an mindestens einem Anschlußstück (5,6,25,30,40,41) mehrere Scheibenfedern (10,11,32a,33a,39) zu einer Serienfederschaltung zusammengefaßt sind, wobei die Scheibenfedern (10,11,32a,33a,39) eine zentrale Durchbrechung (D) zur Durchführung des Leitungsteiles (1,2) besitzen.

6. Rohrverbindung nach Anspruch 1,
**dadurch gekennzeichnet,**
daß die Scheibenfedern (10,11,32a,33a,39) eine ovale Außenkontur besitzen und Ausnehmungen (21-24) zur Aufnahme von Enden (17-20) der Klammern (14,15,32,33,43,44) aufweisen.

7. Rohrverbindung nach Anspruch 1,
**dadurch gekennzeichnet,**
daß an dem ersten Anschlußstück (25) ein Anschlag (26) angeordnet ist, der zusammen mit einem Abschnitt (27) des Anschlußstücks (25) eine Aufnahme (28) für einen Ringkörper (29) bildet, der an das zweite Anschlußstück (30) angepaßt ist und mit diesem ein Gelenk (31) bildet.

8. Rohrverbindung nach Anspruch 1,
**dadurch gekennzeichnet,**
daß an dem ersten Anschlußstück (25) eine Scheibenfeder (33a) und an dem zweiten Anschlußstück (30) eine Scheibenfeder (32a) anschlagbar ist, wobei mindestens eine der Scheibenfedern (33a,32a) mit einer Klammer (33,32) einstückig fest verbunden ist, die in einer Klammeraufnahme (32b,33b) der jeweils gegenüberliegenden Scheibenfeder (33a,32a) eingreifbar ist.

9. Rohrverbindung nach Anspruch 1,
**dadurch gekennzeichnet,**
daß an einem Anschlußstück (40) der beiden Anschlußstücke (40,41) die Klammern (43,44) an ihrem dem Anschlußstück (40) zugewandten Ende mit diesem fest verbunden sind.

10. Rohrverbindung nach Anspruch 1,
**dadurch gekennzeichnet,**
daß an dem zweiten Anschlußstück (30) anstelle der Scheibenfeder (32a) eine starre Andrückscheibe anschlagbar ist und die Verbindung der beiden Anschlußstücke (25,30) nur über die Klammer (33) erfolgt, die mit der Scheibenfeder (33a) fest verbunden ist, wobei die Scheibenfeder (33a) an dem ersten Anschlußstück (25) abstützbar und die Klammer (33) mittels der Nase (36a) in eine Nasenaufnahme der Andrückscheibe einklipsbar ist.

## Claims

1. Articulated pipe connection for two line components of a motor vehicle, which comprises spherical connection elements for connecting the two line components and has, at least on one connection element, a flange-shaped connecting device which can be axially coupled thereto and is connected to the other connection element in a sprung fashion using spring means, the connection elements being held together with a prestressing force using the spring means, characterized in that the spring means comprise a disc spring (10, 11, 32a, 33a, 39) by means of which the connecting device is simultaneously formed, and the spring means also have at least one clamp (14, 15, 32, 33, 43, 44) which has an operative connection with the respective other connection element (5, 6, 25, 30, 40, 41) and engages on the disc spring (10, 11, 32a, 33a, 39) or is permanently connected thereto.

2. Pipe connection according to Claim 1, characterized in that a disc spring (10, 11) which is assigned to each of the connection elements (5, 6) is arranged on each of the two connection elements (5, 6) and can be supported in a bearing (12, 13) of the associated connection element (5, 6), the two disc springs (10, 11) being prestressed against one another by means of at least two clamps (14, 15) in such a way that the pipe connection is held together.

3. Pipe connection according to Claim 1, characterized in that the two connection elements (5, 6) form a ball-and-socket joint (9) which permits an angular movement of the two line components (1, 2) in relation to one another about the longitudinal axis (16), the vertical axis and the transverse axis, the possible pivot angle during the angular movement of the two line components (1, 2) in relation to one another being in the range from 0 to 40 degrees.

4. Pipe connection according to Claim 3, characterized in that clamps (14, 15, 32, 33, 43, 44) are arranged distributed over the circumference of the disc springs (10, 11, 32a, 33a, 39) in order to produce a predetermined spring contact force acting on the ball-and-socket joint (9, 42).

5. Pipe connection according to Claim 1, characterized in that, on at least one connection element (5, 6, 25, 30, 40, 41), a plurality of disc springs (10, 11, 32a, 33a, 39) are combined to form a series spring circuit, the disc springs (10, 11, 32a, 33a, 39) having a central opening (D) for feeding through the line component (1, 2).

6. Pipe connection according to Claim 1, characterized in that the disc springs (10, 11, 32a, 33a, 39) have an oval external contour and recesses (21-24) for receiving ends (17-20) of the clamps (14, 15, 32, 33, 43, 44).

7. Pipe connection according to Claim 1, characterized in that arranged on the first connection element (25) is a stop (26) which, together with a section (27) of the connection element (25) forms a receptacle (28) for an annular element (29) which is matched to the second connection element (30) and forms a joint (31) therewith.

8. Pipe connection according to Claim 1, characterized in that a disc spring (33a) can be coupled to the first connection element (25) and a disc spring (32a) can be coupled to the second connection element (30), at least one of the disc springs (33a, 32a) being integrally and permanently connected to a clamp (33, 32) which can engage in a clamp receptacle (32b, 33b) of the disc spring (33a, 32a) respectively located opposite.

9. Pipe connection according to Claim 1, characterized in that, on one connection element (40) of the two connection elements (40, 41), the clamps (43, 44) are permanently connected to the said connection element (40) at their end facing the connection element (40).

10. Pipe connection according to Claim 1, characterized in that, instead of the disc spring (32a), a rigid pressing plate can be coupled to the second connection element (30), and the two connection elements (25, 30) are connected only via the clamp (33) which is permanently connected to the disc spring (33a), it being possible for the disc spring (33a) to be supported on the first connection element (25) and for the clamp (33) to clip by means of the lug (36a) into a lug receptacle of the pressing plate.

## Revendications

1. Raccordement de tubes articulé pour deux parties de conduite dans un véhicule automobile, qui comprennent des éléments de raccord sphériques pour le raccordement des deux parties de conduite, et qui présente, au moins au niveau d'un élément de raccord, un élément de raccordement en forme de bride qui peut être pressé axialement contre cet élément de raccord et qui est relié élastiquement à l'autre élément de raccord à l'aide d'un moyen élastique, les éléments de raccord étant maintenus assemblés avec une force de précontrainte par l'intermédiaire du moyen élastique, caractérisé en ce que le moyen élastique comprend un ressort disque (10, 11, 32a, 33a, 39) par lequel l'élément de raccordement est formé en même temps et le moyen élastique présente en outre au moins une agrafe (14, 15, 32, 33, 43, 44), qui est en liaison active avec à chaque fois l'autre élément de raccord (5, 6, 25, 30, 40, 41) et qui attaque le ressort disque (10, 11, 32a, 33a, 39) ou est assemblé rigidement à ce ressort disque.

2. Raccordement de tube selon la revendication 1, caractérisé en ce que, contre chacun des deux éléments de raccord (5, 6), est disposé un ressort disque (10, 11), associé à cet élément et qui peut prendre appui dans une portée (12, 13) de l'élément de raccord (5, 6) correspondant, les deux ressorts disques (10, 11) pouvant être précontraints l'un par rapport à l'autre par au moins deux agrafes (14, 15) de telle manière que le raccordement de tubes soit maintenu assemblé.

3. Raccordement de tubes selon la revendication 1, caractérisé en ce que les deux éléments de raccord (5, 6) forment une articulation à rotule (9) qui permet un mouvement angulaire des deux parties de conduite (1, 2) l'une par rapport à l'autre autour de l'axe longitudinal (16), de l'axe vertical et de l'axe transversal, l'angle d'oscillation possible dans le mouvement angulaire des deux parties de conduite (1, 2) l'une par rapport à l'autre étant dans l'intervalle de 0 à 40 grades.

4. Raccordement de tubes selon la revendication 3, caractérisé en ce que, pour développer une force de pression élastique prédéterminée agissant sur l'articulation à rotule (9, 42), des agrafes (14, 15, 32, 33, 43, 44) sont réparties sur la circonférence des ressorts disques (10, 11, 32a, 33a, 39).

5. Raccordement de tubes selon la revendication 1, caractérisé en ce qu'au niveau d'au moins un élément de raccord (5, 6, 25, 30, 40, 41), plusieurs ressorts disques (10, 11, 32a, 33a, 39) sont assemblés pour former un ensemble de ressorts en série, les ressorts disques (10, 11, 32a, 33a, 39) possédant une ouverture centrale (D) pour le passage de la partie de conduite (1, 2).

6. Raccordement de tubes selon la revendication 1, caractérisé en ce que les ressorts disques (10, 11, 32a, 33a, 39) possèdent un profil extérieur ovale et présentent des évidements (21 à 24) destinés à recevoir des extrémités (17 à 20) des agrafes (14, 15, 32, 33, 43, 44).

7. Raccordement de tubes selon la revendication 1, caractérisé en ce que, sur le premier élément de raccord (25), est disposée une butée (26) qui forme, avec un segment (27) de l'élément de raccord (25), un logement (28) pour un corps annulaire (29) qui est adapté au deuxième élément de raccord (30) et forme une articulation (31) avec ce dernier.

8. Raccordement de tubes selon la revendication 1, caractérisé en ce qu'un ressort disque (33a) peut être mis en butée contre le premier élément de raccord (25) et qu'un ressort disque (32a) peut être mis en butée contre le deuxième élément de raccord (30), au moins l'un des ressorts disques (33a, 32a) étant assemblé rigidement, en une seule pièce, avec une agrafe (33, 32) qui peut être engagée dans un logement d'agrafe (32b, 33b) du ressort disque (33a, 32a) qui lui fait face.

9. Raccordement de tubes selon la revendication 1, caractérisé en ce que, sur un élément de raccord (40) des deux éléments de raccord (40, 41), les agrafes (43, 44) sont assemblées rigidement à cet élément à leur extrémité dirigée vers cet élément de raccord (40).

10. Raccordement de tubes selon la revendication 1, caractérisé en ce qu'un disque de pression rigide peut être mis en butée contre le deuxième élément de raccord (30) en remplacement du ressort disque (32a), et l'assemblage des deux éléments de raccord (25, 30) est assuré uniquement par l'agrafe (33) qui est assemblée rigidement au ressort disque (33a), le ressort disque (33a) pouvant être appuyé contre le premier élément de raccord (25) et l'agrafe (33) pouvant être encliquetée au moyen de la dent (36a) dans un logement de dent du disque de pression.
